# EUROPEAN PATENT APPLICATION

(11) **EP 2 843 272 A1**
(43) Date of publication of application: **04.03.2015**
(21) Application number: 13290201.6
(22) Date of filing: 26.08.2013
(51) Int. Cl.: F16K 1/38

(54) **Control valve**

(71) Applicant: MANN+HUMMEL GmbH, 71638 Ludwigsburg (DE)
(72) Inventor: Marimbordes, Thierry, 53170 Bazougers (FR)

(57) **Abstract**

The invention relates to a valve (200) for controlling the flow of a fluid, the valve (200) comprising:
- a valve housing (202) having a bore (208) including a wall (209),
- a valve body (210) movable within said bore (208) and defining with said wall (209) a fluid connection path (207) comprising a fluid inlet port (204) and a fluid outlet port (206), said valve body (210) comprising a first portion (240) carrying a seal (212) on its outer circumference, said seal (212) blocking said inlet port (204) when said valve body (210) is located in a closed position and allowing passage of fluid (201) within said connection path (208) when said valve body (210) is located in a partially or completely open position.

According to the invention, said valve body (210) comprises a second portion (242) extending from said first portion (240) and configured so as to form with said wall (209) a minimum width (d₁) of the fluid connection path (207) when said valve body (210) is located in a predetermined displacement range between said closed position and said open position.

## Description

### TECHNICAL FIELD

The field of the invention relates generally to a control valve for a fluid circuit of an engine of a motor vehicle.

### BACKGROUND OF THE INVENTION

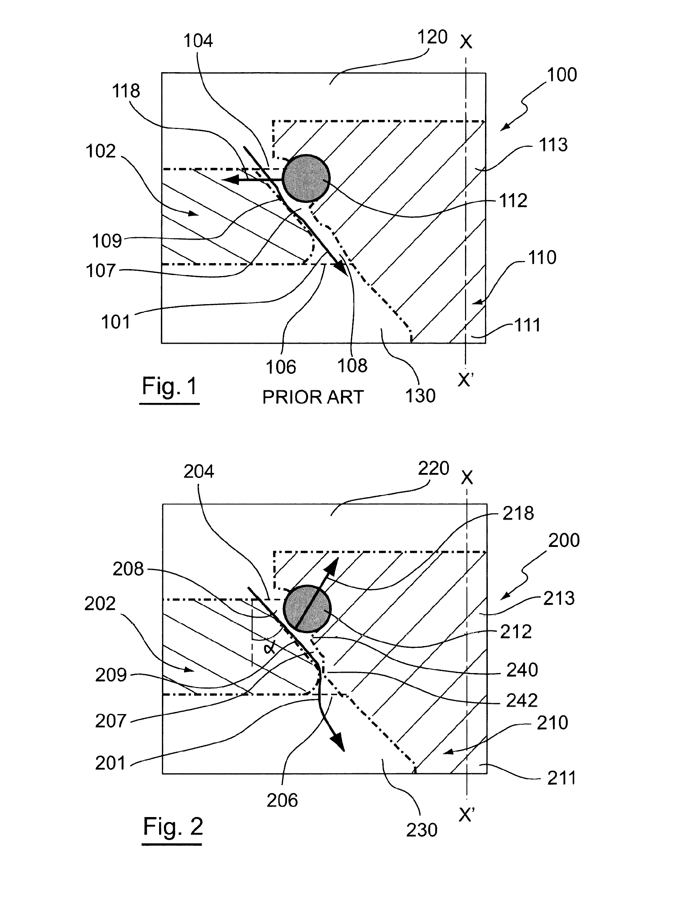

Figure 1 depicts a section cut of a cutout a control valve 100 according to the prior art, the valve 100 being schematically shown in longitudinal section, when in a partially open position.

Such a valve is used for instance in a water cooling system or an oil circulation system of an internal combustion engine of a motor vehicle.

The valve 100 is used to control the flow of a fluid between an inlet chamber 120 and an outlet chamber 130, the inlet chamber 120 having a higher static pressure than the static pressure of the outlet chamber 130.

The valve 100 comprises a valve housing 102 comprising a conical bore 108 having an internal wall 109 defining a valve seat. The valve 100 further comprises a valve body 110 having a stem 111 and a head 113 that is partially located within the bore 108.

The valve body 110 is movable along the longitudinal axis X-X' of the valve 100 between a closed position and an open position.

The head 113 of the valve body 110 carries a seal 112 on its outer circumference. When in its closed position, the valve body 110 rests on the valve seat 109, and the seal 112 blocks the passage of fluid between the fluid inlet port 104 and the fluid outlet port 106.

When the valve body 110 is moved from its closed position to its open position, the valve body 110 is moved along the longitudinal axis X-X' towards the inlet chamber 120.

The fluid passage 107 located between the inlet port 104 and the outlet port 106 of the valve 100 is opened, enabling a flow of fluid 101 from the inlet chamber 120 to the outlet chamber 130 because of the dynamic difference of pressure between both chambers 120, 130.

Because of the tightness function of the seal 112, the seal 112 exceeds the outer surface of the valve body 110 and, as a consequence, forms a recess in the passage 107. This increases the dynamic pressure around the seal 112, which results in a force represented by the arrow with reference numeral 118, which tends to extract the seal 112 from its housing in the valve body 110.

This physical effect is known as "Venturi effect". Indeed, when a fluid flows through a constricted section (for example through the passage formed by a narrow section of an opened valve located between an inlet pipe and an outlet pipe), the fluid pressure is reduced and the velocity of the fluid increases in the constricted section. In other words, such a constricted section causes a fluid suction.

The suction caused by the Venturi effect in the case of Figure 1 tends to attract the seal 112 out of its housing. For example, with a pressure in the inlet chamber 120 of 1,7 bar and a pressure of 0,2 bar in the outlet chamber 130, the extracting pressure in the seal region is around - 6 (minus 6) bar.

This may result in an alteration of the seal 112 and/or of its fastening means, and, as a consequence, in an alteration of the valve tightness and its throughput capacity.

To remedy this problem, it has been proposed to fix the seal to the valve body by gluing, or to provide seal fastening means within the seal housing of the valve body.

Even if this approach tends to remedy the aforementioned problems, it involves some drawbacks. In particular, it has the disadvantage of increasing the complexity and costs of the manufacturing and assembling process of such valves.

Thus, there remains a significant need for a control valve without these drawbacks and limitations.

### SUMMARY OF THE INVENTION

The aim of the invention is thus that of remedying the drawbacks of the prior art cited above.

More specifically, the aim of the invention, according to at least one embodiment, is that of providing a control valve that is reliable, i.e. that ensures optimum tightness of the valve in its closed position.

According to at least one embodiment, the aim of the invention is also that of providing a control valve that is simple and inexpensive to manufacture and to assemble.

The aforementioned problem is solved by a valve for controlling the flow of a fluid:
- a valve housing having a bore including a wall,
- a valve body movable within said bore and defining with said wall a fluid connection path comprising a fluid inlet port and a fluid outlet port, said valve body comprising a first portion carrying a seal on its outer circumference, said seal blocking said inlet port when said valve body is located in a closed position and allowing passage of fluid within said connection path when said valve body is located in a partially or completely open position.

The valve can be used for controlling the flow of a fluid in a combustion engine, for example an engine of a motor vehicle, an engine of a construction vehicle or a ship or a stationary engine.

The valve can also be used for controlling the flow of a fluid like windshield viper water or other liquids used in vehicles.

The valve can be driven by an electrical actuator, by a cam or an expansion element as a drive for one single valve or as a drive for an arrangement of multiple valves, e.g. like a control valve unit for cooling water circuits of combustion engines.

According to the invention, said valve body comprises a second portion extending from said first portion and configured so as to form with said wall a minimum width of the fluid connection path when said valve body is located in a predetermined displacement range between said closed position and said open position.

Thus, the solution of the invention provides a new way of protecting the valve seal and its fastenings means against Venturi effect. By ensuring that the minima of the connection path width (i.e. the lowest cross-section), and thus the highest fluid velocities, are obtained in the region of the second portion of the valve body, i.e. not in the vicinity of the seal, the solution of the invention creates a resulting force in the region of the seal that tends to retract the seal into its housing, instead of tending to extract the seal out of its housing.

The solution of the invention thus ensures that the seal stays in its groove while the valve is opening.

Furthermore, as the solution of the invention avoids the need of retention means to fasten the seal in its housing, it offers the advantage of allowing a simplified manufacturing and assembling process for valves according to the invention, compared to the prior art manufacturing and assembling process of valves.

In accordance with another aspect of the present invention, said second portion is of cylindrical section.

In accordance with another aspect of the present invention, said wall is tapered towards said second portion of said valve body.

Thus, the diameter of the bore is minimal in the region of the second portion of said valve body.

According to some embodiments of the invention, said second portion extends in a direction parallel to the bore inner wall.

Thus, the solution of the invention offers the advantage of keeping the cross section of the connection path constant at said minimal value in the entire second portion region.

According to some embodiments of the invention, said second portion has a cylinder shaped longitudinal section.

Such an embodiment offers the advantage of simplifying the design of the valve body shape. Indeed, when the seat has a conical longitudinal section for example, it ensures that the connection path broadness, in the region of the second portion, will decrease during the opening of the valve and (if the diameter of second portion is great enough and the valve body long enough) become the minima of the whole connection path broadness.

In accordance with another aspect of the present invention, said second portion is located at the level of said fluid outlet port in said predetermined displacement range of said valve body.

In accordance with another aspect of the present invention, said seal is located at the level of said inlet port in said predetermined displacement range of said valve body.

In accordance with another aspect of the present invention, said wall comprises a conical-shaped portion and a cylindrical-shaped portion forming with said second portion the fluid outlet port in said predetermined displacement range of said valve body.

Thus, the bore has varying diameters along the longitudinal axis of the valve.

In accordance with another aspect of the present invention, said seal is in contact with said conical-shaped portion when said valve body is in said closed position and is distant from said wall in a position of the valve body within said predetermined displacement range.

In accordance with another aspect of the present invention, the distance between said seal and said conical-shaped portion at the level of said inlet port is superior to said width in said predetermined displacement range of said valve body.

In accordance with another aspect of the present invention, said seal is partially located in a housing of said first portion of said valve body.

In accordance with another aspect of the present invention, said seal has a circular cross section.

The seal is an O-ring for instance.

In accordance with another aspect of the present invention, said seal has an oblong cross section.

### BRIEF DESCRIPTION OF THE DRAWINGS

The features of the control valve, which is the subject of the invention, are described in greater detail by referring to the attached non-limiting drawings in which:
Figure 1 shows a longitudinal section of a control valve of the prior art, in a partially open position, that has been described previously;
Figure 2 shows a longitudinal section of a control valve according to a first embodiment of the invention, in a partially open position;
Figure 3 shows a longitudinal section of a control valve according to a second embodiment of the invention, in its closed position;
Figure 4 is a detailed view of Figure 3;
Figure 5 shows a longitudinal section of the control valve according to the second embodiment of the invention, in a partially open position;
Figure 6 is a detailed view of Figure 5.

### DETAILED DESCRIPTION

In the two exemplary embodiments described below in relation to Figures 2 to 6, the valve of the invention is a control valve used in a water circuit of an internal combustion engine of a motor vehicle.

In other embodiments, the valve of the invention may be used in an air or an oil circuit of an engine of a motor vehicle for example.

### First embodiment

A first embodiment of the control valve 200 of the invention is schematically shown in Figure 2, in longitudinal section, when in a partially open position. For reasons of clarity, the control valve 200 is only partially represented.

The valve 200 is used to control the flow of a fluid between an inlet chamber 220 and an outlet chamber 230, and is operated by an engine control unit (non illustrated) in response to one or more engine parameters.

The inlet chamber 220 has a higher static pressure than the static pressure of the outlet chamber 230.

In an exemplary embodiment, the pressure in the inlet chamber is around 1,7 bar and the pressure in the outlet chamber is around 0,2 bar.

The valve 200 comprises a valve housing 202 comprising a conical bore 208 whose internal wall 209 defines a valve seat. The valve housing is formed by a ring or by machining. The valve 200 further comprises a valve body 210 movable according to the valve longitudinal axis X-X' within the bore 208. The valve body 210 comprises a stem 211 and a flared head 213.

In the exemplary embodiment presented in Figure 2, the bore conical section forms an angle (α) of 30 degrees with the longitudinal axis X-X' of the valve 200. In other embodiments, valve seats having different bore angles, notably angles in a range from 30 to 45 degrees, may be implemented.

The valve body 210 comprises a first portion 240 carrying a seal 212 on its outer circumference, the seal 212 being located in part in a circular housing of the valve body 210.

As illustrated in Figure 2, the valve 200 of the invention differs from the valve 100 of the prior art because of the presence of a bottleneck in the passage 207, which is obtained by modifying the shape of the valve body 210.

In the valve 100 of the prior art, the head portion 113 of the valve body 110 is tapered from the stem 111. In the valve 200 of the invention, the head portion 113 of the valve body 210 is also tapered from the stem 211 but comprises a second portion 242 which extends in a direction parallel to the longitudinal axis X-X' of the valve 200. In other words, the second portion 242 has a cylinder shaped section.

The second portion 242 is configured for enabling the connection of the inlet port 204 and the outlet port 206 when the valve 200 is in its open position, in order to enable the flow 201 of the fluid.

When the valve 200 is partially open, the second portion 242 is also configured to form a bottleneck in the passage 207, whose width is defined by the distance between the wall 209 of the bore 208 and the outer surface of the valve body 210 at the level of the second portion 242.

The width of the bottleneck at the level of this portion 242 is inferior to the width of the passage 207 at the level of the seal 212 when the valve 200 is partially opened.

In other words, the bottleneck is the narrower part of the passage 207, where the fluid velocity is the highest.

It is to be noted that the width of the passage 207 is defined by the distance between the outer surface of the valve body 210 and the inner wall 209 of the bore 208, when measured perpendicularly to the longitudinal axis X-X'.

The circumference of this second portion 242 is chosen so as to narrow the passage 207, or connection path cross section, so that it is narrower in the second portion 242 region than in the seal 212 vicinity when the valve body 210 moves from its closed position toward its open position.

This results in a dynamic pressure around the part 242 greater than around the seal 212.

As represented in Figure 2, at the opposite of the prior art solution, the resulting force 218 tends to push the seal 212 into its housing.

For example, with a pressure in the inlet chamber 220 of 1,7 bar and a pressure of 0,2 bar in the outlet chamber 230, the dynamic pressure at the level of the second portion 242 is around - 6 (minus 6) bar and the pressure in the seal 212 region is between 0,3 to 0,7 bar.

Thus, the solution of the invention avoids the need of retention means to fasten the seal 212 in its housing, as required by the approach of the prior art.

Indeed, the minimum cross section of the passage 207 defined by said bore inner wall 209 and said valve body 210, is set in the second portion 242 region, away from the seal 212 region, so that the seal 212 is not subjected to a force which tends to extract it from its housing but to a force which tends to urge or press it in its housing.

The solution of the invention simplifies thus the manufacturing and assembling process of control valves.

According to a more detailed approach, four states may be distinguished during the valve 200 opening.

In the initial state (state 0), the valve is in a closed position, and the seal 212 is urged against the wall 209 of the valve seat.

When the valve 200 just begins to open (state 1), even if the connection between the inlet 204 and outlet port 206 is achieved, the seal 212 is still almost urged on the seat wall 209. So, even if the width of the passage 207 is minimum around the seal 212, as the seal 212 is almost still compressed on the valve body wall 209 and so cannot move much, the force that tends to extract the seal 212 from its housing has no significant effect.

When the valve 200 continues to open (state 2 corresponding to figure 2), the passage 207 gets larger, but because the width of the passage 207 is minimum at the level of the second portion 242 of the valve body 210, the resulting force 218 tends to press the seal 212 into its housing.

When the valve 200 is fully opened (state 3), as the difference of pressure has decreased, the effect of the force applied on the seal 212 is not significant.

### Second embodiment

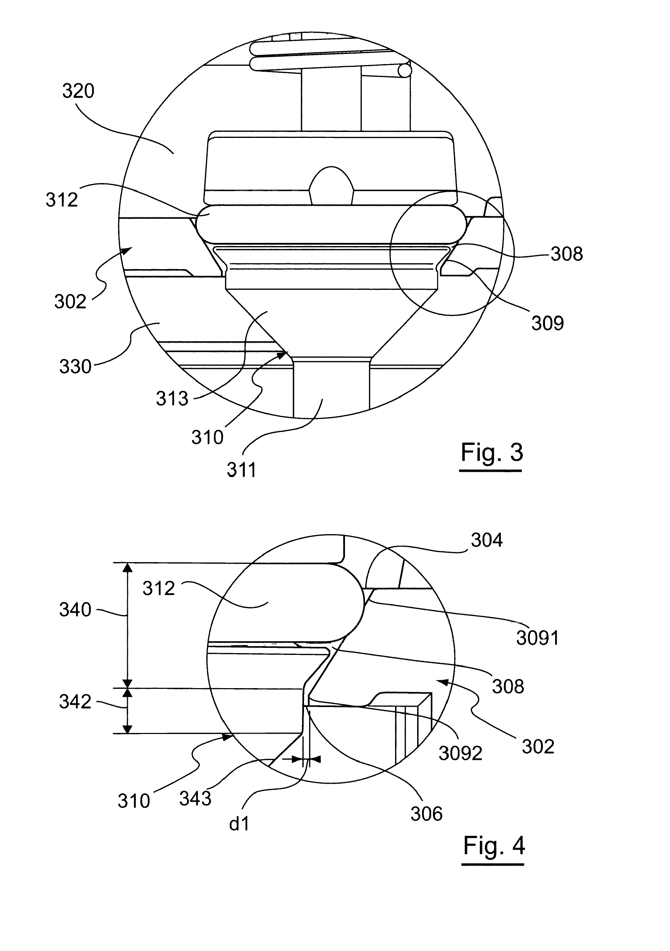

Figures 3 to 6 show a control valve 300 according to a second embodiment of the invention. For reasons of clarity, the control valve 300 is only partially represented.

The control valve 300 controls the flow of fluid from an inlet chamber 320 to an outlet chamber 330, which is at a lower pressure than the pressure of the inlet chamber 320.

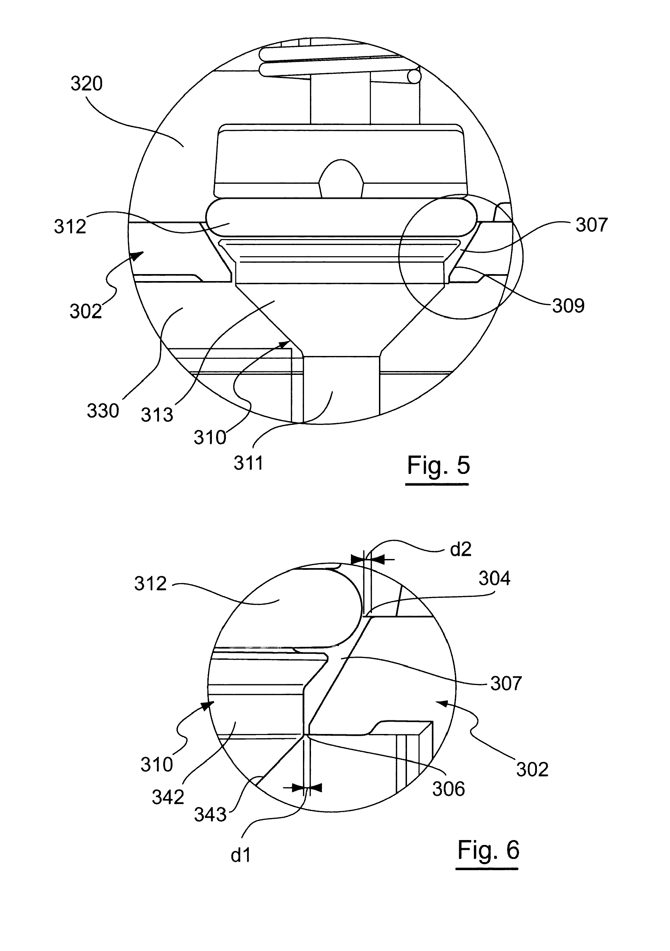

The control valve 300 is presented in its closed position in figure 3 and in its open position in figure 5, figures 4 and 6 being detailed views of figures 3 and 5 respectively.

The valve 300 has a conical bore 308 in which a valve body 310 is movable, defining an inlet port 304 and an outlet port 306.

The wall 309 of the bore 308 comprises a first conical portion 3091 and a second cylindrical portion 3092. In this exemplary embodiment, the diameter of the cylindrical portion 3092 is equal to 14,79 mm and the first conical portion 3091 is inclined by an angle of 45° with respect to the longitudinal axis of the bore 308.

The valve body 310 comprises a stem 311 and a head 313. The head comprises a first portion 340 carrying a circular seal 312, a second portion 342 that is cylinder-shaped, with a diameter lower than the diameter of the second cylindrical portion 3092, and a third conical portion 343 linking the second portion 342 to the stem 311.

Although not represented totally, there are means biasing the valve body 310 toward its closed position and control means for actuating the valve body 310 between an open and a closed position.

In the exemplary embodiment presented, the second portion 342 has a diameter of 14,59 mm and a height of 1,51 mm, the circular seal 312 having a diameter of 2,65 mm. As illustrated in figures 3 and 4, the seal 312 excesses the first portion 340, so the seal 312 is urged on the wall 309 of the valve seat in the valve closed position.

In the closed position of the control valve 300, the second portion 342 is partially in the bore 308 and the distance "d₁" between the outer wall of the second portion 342 of the valve body 310 and the second cylindrical portion 3092 of the wall 309 of the valve seat is equal to 0,20 mm.

When the valve body 310 is raised in an opening direction, from its closed position towards its open position, as represented in figure 5, the valve body 310 is lifted towards the inlet chamber 320. In this example, the valve body 310 has moved along its longitudinal axis by a distance equal to 0,7 mm.

Because of the conical section 3091 of the valve seat, the seal 312 is no more in contact with the valve seat wall 309. A passage 307, or connection path, from the inlet port 304 to the outlet port 306 is formed between the valve body 310 and the valve seat wall 309.

As represented in figure 6, the passage 307 at the inlet port 304 (in the seal 312 region) has an annular section "d₂" of width equal to 0,32 mm once the valve body 310 (and thus the seal 312 and the second portion 342) has moved along its longitudinal axis by a distance equal to 0,7 mm.

The second portion 342 of the valve body 310 having moved inside the bore 309, the connection path at the outlet port 306 has an annular section of "d₁" of width equal to 0,20 mm. The value of "d₁" is constant during the time the valve body has moved from its position of figure 3 to its position of figure 5.

It is to be noted that "d₁" is the absolute minimum width of the passage 307 in the open position of figures 5 and 6.

Thus, the minimal width of the connection path, from the inlet port 304 to the outlet port 306, is obtained in the region of the outlet port 306 and not in the vicinity of the seal 312 as in the prior art. In contrast with the prior art, the resulting force at the vicinity of the seal 312 tends to press the seal 312 into its housing.

As explained previously in relation to the first embodiment, when the valve 300 just begins to open (state 1), even if the connection between the inlet 304 and outlet port 306 is achieved, the seal 312 is still almost urged on the seat wall 309. So, even if the width of the passage 307 is minimum around the seal 312, as the seal 312 is almost still compressed on the valve body wall 309 and so cannot move much, the force that tends to extract the seal 312 from its housing has no significant effect.

It is only once the valve body 310 has moved along its longitudinal axis by a predetermined distance, equal to 0,5 mm in this example, that "d₁" becomes the absolute minimum width of the passage 307. "d₁" remains the absolute minimum width of the passage 307 on a predetermined displacement range of the valve body 310 along its longitudinal axis, from 0,5 mm to 0,9 mm in this example.

In the second embodiment, the second cylindrical portion 3092 of the wall 309 extends in parallel to the outer wall of the second portion 342 of the valve body 310, so as to keep the minimum width "d₁" of the passage 307 constant during the opening of the valve 300.

Of course, other embodiments, where both walls are not parallel, are possible. It is therefore necessary to adapt the shape of the second portion 342 and of a portion 3092 in order to ensure that the area around these portions stays the location of the minimum width of the passage 307 during the opening of the valve.

In another embodiment, the valve seat may be conical and the valve body may be at least partially tubular.

Also, the shape of second portion 342 of the valve body 310 is not limited to the shape illustrated in the previous embodiments.

In the embodiments described previously, the valve body is adapted to move in the inlet chamber during its opening, and carries a seal on its side closest to the inlet chamber. According to other embodiments, the valve body may engage in the outlet chamber and/or may carry a seal on its side closest to the outlet chamber.

## Claims

1. Valve (200) for controlling the flow of a fluid, particular in an engine, particular an engine, particular an engine of a motor vehicle, the valve (200) comprising:
- a valve housing (202) having a bore (208) including a wall (209),
- a valve body (210) movable within said bore (208) and defining with said wall (209) a fluid connection path (207) comprising a fluid inlet port (204) and a fluid outlet port (206), said valve body (210) comprising a first portion (240) carrying a seal (212) on its outer circumference, said seal (212) blocking said inlet port (204) when said valve body (210) is located in a closed position and allowing passage of fluid (201) within said connection path (208) when said valve body (210) is located in a partially or completely open position,
said valve (200) being **characterized in that** said valve body (210) comprises a second portion (242) extending from said first portion (240) and configured so as to form with said wall (209) a minimum width (d₁) of the fluid connection path (207) when said valve body (210) is located in a predetermined displacement range between said closed position and said open position.

2. Valve (200) according to claim 1, **characterized in that** said second portion (242) is of cylindrical section.

3. Valve (200) according to claim 1 or 2, **characterized in that** said wall (209) is tapered towards said second portion (242) of said valve body (210).

4. Valve (200) according to any of claims 1 to 3, **characterized in that** said second portion (242) is located at the level of said fluid outlet port (206) in said predetermined displacement range of said valve body (210).

5. Valve (200) according to any of claims 1 to 4, **characterized in that** said seal (212) is located at the level of said inlet port (204) in said predetermined displacement range of said valve body (210).

6. Valve (200) according to any of claims 1 or 5, **characterized in that** said wall (209) comprises a conical-shaped portion (3091) and a cylindrical-shaped portion (3092) forming with said second portion (242) the fluid outlet port (206) in said predetermined displacement range of said valve body (210).

7. Valve (200) according to claim 6, **characterized in that** said seal (212) is in contact with said conical-shaped portion (3091) when said valve body (210) is in said closed position and is distant from said wall (209) in a position of the valve body (210) within said predetermined displacement range.

8. Valve (200) according to claim 7, **characterized in that** said the distance (d₂) between said seal (212) and said conical-shaped portion (3091) at the level of said inlet port (204) is superior to said width (d₁) in said predetermined displacement range of said valve body (210).

9. Valve according to any of claims 1 to 8, **characterized in that** said seal (212) is partially located in a housing of said first portion (240) of said valve body (210).

10. Valve according to any of claims 1 to 9, **characterized in that** said seal (212) has an oblong cross section.

11. Valve according to any of claims 1 to 9, **characterized in that** said seal (212) has a circular cross section.
